# EUROPÄISCHE PATENTSCHRIFT

(11) **EP 2 340 999 B1**
(45) Veröffentlichungstag und Bekanntmachung des Hinweises auf die Patenterteilung: **28.03.2018**
(21) Anmeldenummer: 10014559.8
(22) Anmeldetag: 12.11.2010
(51) Int. Cl.: B64G 1/62, B64G 1/10

(54) **Landevorrichtung für Raumfahrzeuge**
Landing device for spacecraft
Dispositif d'atterrissage pour véhicules spatiaux

(30) Priorität: 04.01.2010 DE 102010004571
(43) Veröffentlichungstag der Anmeldung: 06.07.2011
(73) Patentinhaber: Airbus Defence and Space GmbH, 82024 Taufkirchen (DE)
(72) Erfinder: Buchwald, Robert, 28816 Stuhr (DE); Werth, Erich, 28816 Stuhr (DE)
(74) Vertreter: Marschall, Stefan

(56) Entgegenhaltungen:
- DE-A1-102005 062 841
- US-A- 3 143 321
- US-A- 3 175 789
- US-A- 3 181 821
- US-B1- 6 227 494

## Beschreibung

Die Erfindung betrifft eine Landevorrichtung für Raumfahrzeuge mit Landebeinen sowie mit an den dem Raumfahrzeug abgewandten Enden der Landebeine gelenkig gehalterten Landefüßen mit einem Fußteller.

Bei der Landung von Raumfahrzeugen auf Himmelskörpern mit geringer oder nicht vorhandener Atmosphäre, wie zum Beispiel dem Mond, erfolgt der Abbremsvorgang bis kurz vor dem Aufsetzen in der Regel über separate Bremstriebwerke. Dabei wird bei Unterschreitung eines vorgegebenen Abstandes zur Oberfläche entweder über einen elektromechanischen Oberflächensensor oder aber mittels einer berührungslosen Entfernungsmessung, beispielsweise über ein Radarsystem, ein Signal generiert, das zur Abschaltung der Bremstriebwerke führt.

Zur Verminderung der durch den Aufsetzvorgang entstehenden Schocklasten können die Landebeine eines solchen Raumfahrzeuges oder Landegerätes mit Schockabsorbern, zum Beispiel mit sogenannten Crash-Elementen aus Aluminium-Honigwaben, ausgestattet sein. Um ein zu starkes Einsinken der Landebeine in die in vielen Fällen sehr weiche Oberfläche des Himmelskörpers zu vermeiden, werden überdies die Kontaktkräfte durch geeignete Fußteller, sogenannte Footpads, die jeweils an den unteren Enden der Landebeine angebracht sind, auf eine ausreichend große Fläche verteilt. Die Verbindung zwischen dem Landefuß und dem zugeordneten Landebein kann dabei entweder starr oder aber über geeignete Gelenke erfolgen. So ist beispielsweise vom Apollo Lunar Module eine Landevorrichtung der eingangs genannten Art mit einer gelenkigen Halterung der Landefüße an den Landebeinen bekannt geworden.

Während des Aufsetzvorgangs kann zudem eine drehbare Lagerung des Landefußes die Belastung des Landebeines und insbesondere der Schockabsorber durch auftretende Biegemomente verhindern, da der Landefuß auf diese Weise ungehindert der Kontur der Oberfläche des Himmelskörpers zu folgen vermag. In diesem Fall muß jedoch das Gelenk während des Startvorganges der Rakete bis kurz vor der Landung des Landegerätes blockiert werden, um eine unkontrollierte Ausgangsposition der Fußteller zu vermeiden. Die Blockierung der Verbindung zwischen dem Landefuß bzw. Fußteller und dem Landebein kann über eine mechanische Verbindung erfolgen, die so ausgelegt sein muß, daß sie die Belastungen während des Starts von der Erde und des Anfluges zum Zielort unbeschadet übersteht, daß sie andererseits aber bei den zwangsweise auftretenden höheren Kräften im Moment des Kontaktes mit dem Boden des Himmelskörpers zerstört wird.

Nach der US 6,227,494 B1, die den nächstliegenden Stand der Technik darstellt und den Oberbegriff des Anspruchs 1 offenbart, ist eine Landevorrichtung für Raumfahrzeuge bekannt, wobei Landebeine mit an dem Raumfahrzeug abgewandten Enden gelenkig angeordnete Füße mit Fußteller aufweisen. Ferner sind bei dieser Anordnung mechanische Verbindungen lediglich zur Struktur vorgesehen. Es besteht der Mangel, dass durch diese Ausbildung somit bei einem Bodenkontakt keine Redundanz von mechanischer und elektrischer Auslösung gewährleistet wird und keine Freigabe der Fixierung des Fußtellers erfolgt.

Der Erfindung liegt die Aufgabe zugrunde, eine Landevorrichtung der eingangs genannten Art so auszubilden, daß sie die Aufgaben der Identifikation des Bodenkontaktes, der Fixierung des Fußtellers während des Anfluges und der Freigabe dieser Fixierung beim Auftreffen auf dem Boden des Himmelskörpers auf einfache, gewichtssparende und redundante Weise erfüllt.

Diese Aufgabe wird mit einer Landevorrichtung gemäß den Merkmalen des Anspruchs 1 gelöst.

Dazu ist bei einer derartigen Landevorrichtung eine Kombination des Kontaktsensors und einer mechanischen Verbindung zwischen dem Landebein und dem an diesem angeordneten Landefuß vorgesehen, wobei in diese Verbindung wenigstens zwei elektrische Sensorelemente in Form eines stromführenden Leiters oder eines Schalters integriert ist.

Bei einer mechanischen Zerstörung der Verbindung durch die beim Aufsetzvorgang auf dem Boden des Himmelskörpers auftretenden hohen mechanischen Belastungen wird entweder der Leiter ebenfalls zerstört oder es wird der Schalter ausgelöst. Die Unterbrechung des Stromflusses einem oder in mehreren dieser Sensorelemente wird durch eine geeignete Auswerteeinheit festgestellt, die dann ein Signal zur Abschaltung der Triebwerke erzeugt.

Bei der erfindungsgemäß vorgesehenen Landevorrichtung werden somit die Aufgaben der Identifikation des Bodenkontakts, der Fixierung des Fußtellers während des Anfluges und der Freigabe dieser Fixierung beim Auftreffen auf den Boden durch eine einfache, sehr leichte und mehrfach redundante Anordnung erfüllt, die zugleich sowohl die Masse als auch die Komplexität des Systems verringert.

Nachfolgend soll die Erfindung anhand von in der Zeichnung dargestellten Ausführungsbeispielen näher erläutert werden. Es zeigen
- Fig. 1: den unteren Teil eines Landebeines für ein planetares Landegerät mit einem daran angeordneten Landefuß in perspektivischer Darstellung,
- Fig. 2: eine Detaildarstellung einer ersten Ausführungsform der Anordnung gemäß Fig. 1,
- Fig. 3: eine Detaildarstellung einer zweiten Ausführungsform der Anordnung gemäß Fig. 1 und
- Fig. 4: drei aufeinanderfolgende Stadien bei der Landung der Anordnung gemäß Fig. 1.

In den Figuren sind gleiche Bauteile mit den gleichen Bezugszeichen versehen.

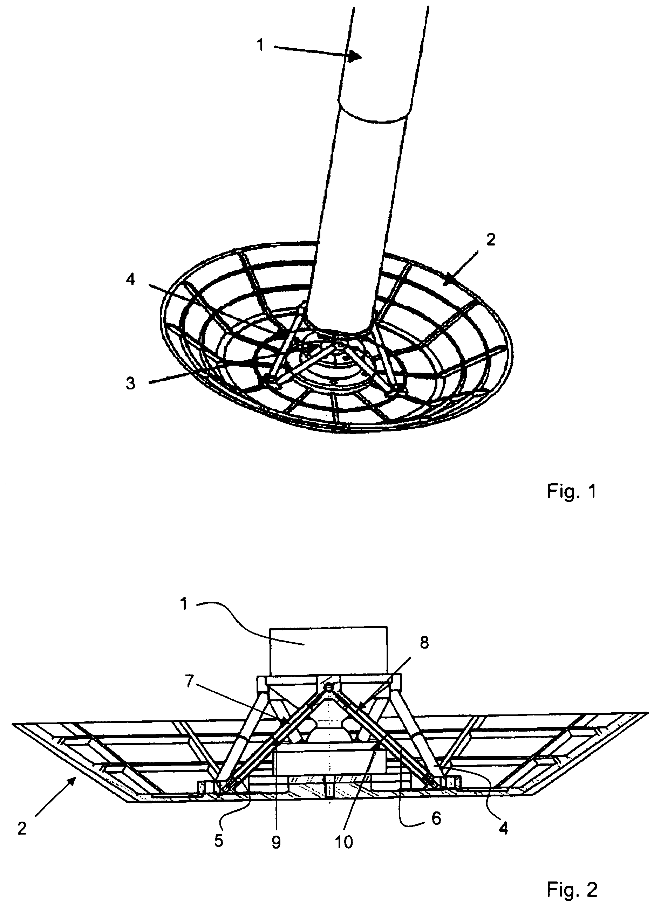

Die in Fig. 1 dargestellte Landevorrichtung für ein Raumfahrzeug besteht aus wenigstens drei Landebeinen 1 mit jeweils einem an dem dem Raumfahrzeug abgewandten Ende jedes Landebeines 1 angeordneten Landefußteller 2. Der Landefußteller 2 ist über eine sphärische Lagerung 3 und über eine Rotationsfixierung, die aus einem Hexapod-Fachwerk 4 aus dünnen Streben betseht, am Landebein 1 gehaltert.

Bei der in Fig. 2 dargestellten ersten Ausführungsform der Landevorrichtung ist im Inneren von vergleichsweise dünnen Rohren 5, 6 jeweils ein Signalgeber in Form eines Drahtes 7, 8 als stromführender Leiter angeordnet, wobei die Rohre 5, 6 jeweils eine Sollbruchstelle 9, 10 aufweisen..

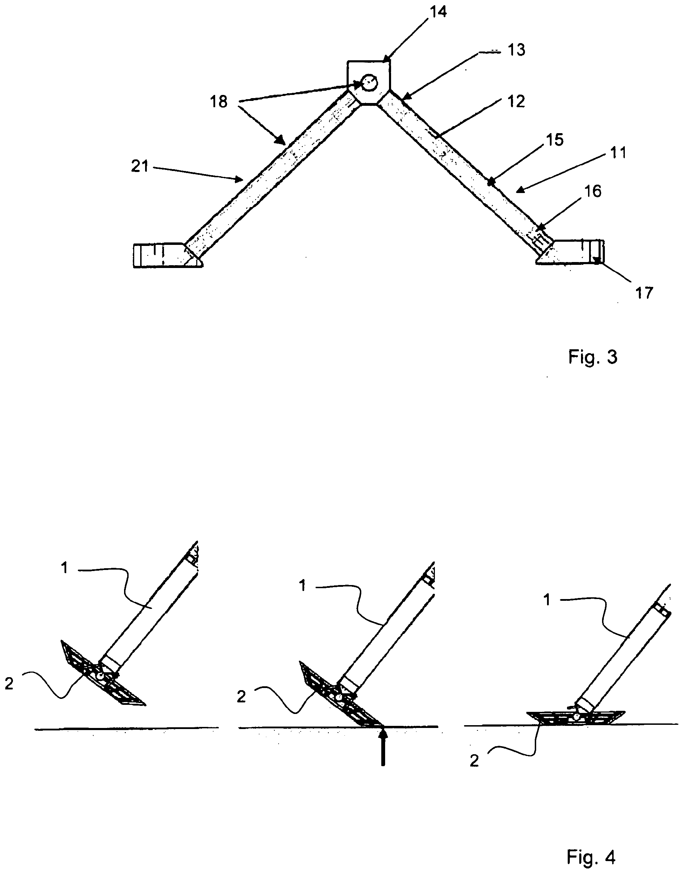

Fig. 3 zeigt eine zweite Ausführungsform der Landevorrichtung, bei der im Inneren wenigstens eines von mehreren der Rohre 11, 21 ein elektrischer Schalter 12 als Signalgeber vorgesehen ist. Die Rohrre 11, 21 sind jeweils über einen Rohrabschnitt 13 mit einer oberen Befestigung 14 für das Landebein und über ein Distanzstück 15 und eine Einstellschraube 16 mit einer unteren Befestigung 17 für den in der Figur nicht gezeigten Landefußteller verbunden. Auch bei dieser Anordnung sind Sollbruchstellen 18 vorgesehen.

Bei der Landung des Raumfahrzeuges und dem in Fig. 4 in drei aufeinanderfolgenden Phasen dargestellten Aufsetzen auf dem Boden eines Himmelskörpers ist vor einem Kontakt mit dem Boden der Landefußteller 2 jedes Landebeines 1 senkrecht zur primären Strebe des Landebeines 1 ausgerichtet und durch das Hexapod-Fachwerk 4 an dieser Hauptstrebe fixiert. Diese Fixierung verhindert neben translatorischen auch alle rotatorischen Bewegungen des Landefußtellers 2 relativ zur Hauptstrebe des Landebeines 1.

Durch die senkrechte Ausrichtung von Landebein 1 und Landefußteller 2 zueinander werden die zu erwartenden Lasten während der Anflugphase sehr niedrig gehalten, außerdem gewährleistet diese Orientierung das Zustandekommen eines ausreichenden Biegemomentes aufgrund der Kontaktkraft beim Aufsetzen auch bei sehr nachgiebigem Boden; dies ist in der mittleren Darstellung der Fig. 4 durch einen Kraftpfeil angedeutet. Dieses Biegemoment führt zu einer mechanischen Zerstörung der Rotationsfixierung des Landefußtellers 2, wie abschließend in der rechten Abbildung in Fig. 4 gezeigt.

Bei beiden in den Figuren 2 und 3 dargestellten Ausführungsformen des in der Vorrichtung vorgesehenen Signalgebers 7, 8, 12 führt die Zerstörung eines Rohres 5, 6, 11, 21 oder der Verbindung zwischen dem Rohr 11, 21 und der Hauptstrebe des Landebeines 1 zu einer Unterbrechung des Stromflusses, ausgelöst durch die Aktivierung des Schalters 12 oder das Zerreißen wenigstens eines stromführenden Leiters 7, 8. Die dafür erforderliche Bewegung wird durch die Anpassung der Ausrichtung des Landefußtellers 2 an die lokale Bodenausrichtung realisiert.

Jedes Signal eines der Schalter 12 bzw. die Unterbrechung des Stromflusses in jedem einzelnen der Leiter 7, 8 wird durch eine angeschlossene, in den Figuren nicht dargestellte Auswerteeinheit erfaßt. Sobald mindestens die Signale von zwei Schaltern eines oder mehrerer Beine von der Auswerteeinheit identifiziert wurden, erzeugt diese ein Signal, das zur Abschaltung des bzw. der Bremstriebwerke des Raumfahrzeuges führt. Bei einem System mit mindestens drei der Schalter 12 oder der Leiter 7, 8 pro Bein ist bereits eine ausreichende Fehlertoleranz im Sinne eines redundanten Systems sichergestellt.

## Patentansprüche

1. Landevorrichtung für Raumfahrzeuge mit Landebeinen sowie mit an den dem Raumfahrzeug abgewandten Enden der Landebeine gelenkig gehalterten Landefüßen mit einem Fußteller, **gekennzeichnet durch** eine mit wenigstens einer Sollbruchstelle (9, 10, 18) versehene mechanische Verbindung (5, 6, 11, 21) zwischen jedem Landebein (1) und dem an diesem angeordneten Landefußteller (2), in die wenigstens zwei elektrische Sensorelemente (7, 8, 12) integriert sind.

2. Landevorrichtung gemäß Anspruch 1, **dadurch gekennzeichnet, daß** die elektrischen Sensorelemente als stromführende Leiter (7, 8) ausgebildet sind.

3. Landevorrichtung gemäß Anspruch 1, **dadurch gekennzeichnet, daß** die elektrischen Sensorelemente als Schalter (12) ausgebildet sind.

4. Landevorrichtung gemäß einem der Ansprüche 1 bis 3, **dadurch gekennzeichnet, daß** die elektrischen Sensorelemente (7, 8, 12) mit einer Auswerteeinheit zur Erzeugung eines Abschaltsignales für wenigstens ein Bremstriebwerk verbunden sind.

## Claims

1. A landing device for spacecraft, having landing legs and landing feet, which are held in an articulated manner on the ends of the landing legs remote from the spacecraft and have a footplate, **characterised by** a mechanical connection (5, 6, 11, 21) between each landing leg (1) and the landing footplate (2) arranged thereon, which mechanical connection is provided with at least one predefined breaking point (9, 10, 18) and into which at least two electrical sensor elements (7, 8, 12) are integrated.

2. The landing device according to Claim 1, **characterised in that** the electrical sensor elements are in the form of current-carrying conductors (7, 8).

3. The landing device according to Claim 1, **characterised in that** the electrical sensor elements are in the form of switches (12).

4. The landing device according to any one of Claims 1 to 3, **characterised in that** the electrical sensor elements (7, 8, 12) are connected to an evaluation unit for generating a switch-off signal for at least one retrorocket.

## Revendications

1. Dispositif d'atterrissage pour véhicules spatiaux comprenant des pattes d'atterrissage ainsi que des pieds d'atterrissage avec une rondelle de pied disposés articulés sur les extrémités des pattes d'atterrissage détournées du véhicule spatial, **caractérisé par** une liaison mécanique (5, 6, 11, 21) dotée d'au moins d'un point de rupture nominal (9, 10, 18), entre chaque patte d'atterrissage (1) et la rondelle de pied (2) disposée sur celle-ci, dans laquelle au moins deux éléments de capteur électriques (7, 8, 12) sont intégrés.

2. Dispositif d'atterrissage selon la revendication 1, **caractérisé en ce que** les éléments de capteur électriques sont conçus en tant que conducteurs de courants (7, 8).

3. Dispositif d'atterrissage selon la revendication 1, **caractérisé en ce que** les éléments de capteur électriques sont conçus en tant qu'interrupteurs (12).

4. Dispositif d'atterrissage selon une des revendications 1 à 3, **caractérisé en ce que** les éléments de capteur électriques (7, 8, 12) sont reliés à une unité d'évaluation pour produire un signal d'arrêt pour au moins un mécanisme d'entraînement de frein.
